# EUROPEAN PATENT APPLICATION

(11) **EP 4 324 864 A1**
(43) Date of publication of application: **21.02.2024**
(21) Application number: 23188304.2
(22) Date of filing: 28.07.2023
(51) Int. Cl.: C08F 290/06, C08F 2/48, C08K 3/04

(54) **PHOTOCURABLE COMPOSITION AND SHAPED PRODUCT FORMED FROM THE PHOTOCURABLE COMPOSITION**

(30) Priority: 19.08.2022 JP 2022131047
(71) Applicant: Sumitomo Rubber Industries, Ltd., Kobe-shi, Hyogo 651-0072 (JP)
(72) Inventor: KURODA, Kenichi, Kobe-shi, Hyogo, 651-0072 (JP); FUJIWARA, Takahiro, Kobe-shi, Hyogo, 651-0072 (JP)
(74) Representative: Manitz Finsterwald Patent- und Rechtsanwaltspartnerschaft mbB

(57) **Abstract**

An object of the present invention is to provide a photocurable composition from which a molded product having excellent mechanical properties is obtained. The present invention provides a photocurable composition comprising: a urethane (meth)acrylate oligomer, a vinyl monomer including a first monomer having a glass transition temperature (Tg1) of -100 °C or more and 10 °C or less and a second monomer having a glass transition temperature (Tg2) of 70 °C or more and 150 °C or less, and a carbon nanotube, wherein the photocurable composition comprises the carbon nanotube in an amount ranging from 0.01 part by mass to 0.35 part by mass with respect to 100 parts by mass of a total amount of the urethane (meth)acrylate oligomer and the vinyl monomer.

## Description

### FIELD OF THE DISCLOSURE

The present invention relates to a photocurable composition, more preferably relates to a photocurable composition suitably used for stereolithography.

### DESCRIPTION OF THE RELATED ART

In recent years, a three-dimensional laminating and shaping apparatus (so-called 3D printer) for producing a three-dimensional structure by laminating and curing a resin based on design data of the three-dimensional structure has been put into practice. As the three-dimensional structure produced by the three-dimensional laminating and shaping apparatus, a three-dimensional structure made of a resin is well known.

For example, WO 2017/154335 discloses a rubber composition for three-dimensional laminating and shaping, wherein the rubber composition comprises a liquid rubber. The rubber composition is suitably used to produce an elastic molded product by the three-dimensional laminating and shaping apparatus.

JP 2021-75044 A discloses a polymer composition for stereolithography comprising a liquid polymer and a monomer, wherein the polymer composition for stereolithography has a viscosity of 3,000 mPa·s or less as measured with an E-type viscometer under conditions of a cone plate diameter of ϕ 25 mm and a shear rate of 100 second⁻¹ in an environment of a temperature of 25 °C and a relative humidity of 50 %.

### SUMMARY OF THE DISCLOSURE

The cured product of the conventional photocurable composition used for stereolithography does not have sufficient mechanical properties. The present invention has been made in view of the abovementioned circumstances, and an object of the present invention is to provide a photocurable composition providing a shaped product having excellent mechanical properties.

The present invention provides a photocurable composition comprising: a urethane (meth)acrylate oligomer, a vinyl monomer including a first monomer having a glass transition temperature (Tg1) of -100 °C or more and 10 °C or less and a second monomer having a glass transition temperature (Tg2) of 70 °C or more and 150 °C or less, and a carbon nanotube, wherein the photocurable composition comprises the carbon nanotube in an amount ranging from 0.01 part by mass to 0.35 part by mass with respect to 100 parts by mass of a total amount of the urethane (meth)acrylate oligomer and the vinyl monomer.

The photocurable composition according to the present invention is suitably used for stereolithography.

The shaped product formed from the photocurable composition according to the present invention has excellent mechanical properties.

### SUMMARY OF THE DISCLOSURE

### <Photocurable composition>

The present invention provides a photocurable composition comprising: a urethane (meth)acrylate oligomer, a vinyl monomer including a first monomer having a glass transition temperature (Tg1) of -100 °C or more and 10 °C or less and a second monomer having a glass transition temperature (Tg2) of 70 °C or more and 150 °C or less, and a carbon nanotube, wherein the photocurable composition comprises the carbon nanotube in an amount ranging from 0.01 part by mass to 0.35 part by mass with respect to 100 parts by mass of a total amount of the urethane (meth)acrylate oligomer and the vinyl monomer.

### 1. Urethane (meth)acrylate oligomer

The urethane (meth)acrylate oligomer is an oligomer having a (meth)acryloyl group and a urethane bond in the molecule. The (meth)acryloyl group means a methacryloyl group and/or an acryloyl group. An oligomer is a molecule of multiple compounds bonded. The oligomer is preferably, for example, a polymer of about 3 to about 100 compounds bonded together, more preferably a polymer of about 3 to about 50 compounds bonded together, and even more preferably a polymer of about 3 to about 40 compounds bonded together.

Examples of the urethane (meth)acrylate oligomer include a product obtained by a reaction between a urethane prepolymer having an isocyanate group and a (meth)acrylate monomer having a hydroxy group, a product obtained by a reaction between a urethane prepolymer having a hydroxy group and a (meth)acrylate monomer having an isocyanate group, and a product obtained by a reaction between a urethane prepolymer having an amino group and a (meth)acrylate monomer having an isocyanate group. In the present invention, (meth)acrylate means acrylate and/or methacrylate.

The urethane prepolymer is preferably a product obtained by a reaction between a polyisocyanate and a polyol. The molecular chain of the urethane prepolymer has a urethane bond formed by the reaction between the polyisocyanate and the polyol. The urethane prepolymer has an isocyanate group or hydroxy group at the terminal of the molecular chain. In addition, in some cases, the urethane prepolymer has an amino group at the terminal of the molecular chain.

The urethane (meth)acrylate oligomer preferably has the polyisocyanate and the polyol deriving from the urethane prepolymer as the constituent component, and may have the polyisocyanate, the polyol and the polyamine deriving from the urethane prepolymer as the constituent component.

Examples of the polyol component constituting the urethane (meth)acrylate oligomer include a low molecular weight polyol having a molecular weight of less than 500, and a high molecular weight polyol having a number average molecular weight of 500 or more.

Examples of the high molecular weight polyol include a polyether polyol, a polyester polyol, a polycaprolactone polyol, a polycarbonate polyol, and an acrylic polyol. Examples of the polyether polyol include polyoxyethylene glycol (PEG), polyoxypropylene glycol (PPG), and polyoxytetramethylene glycol (PTMG). Examples of the polyester polyol include polyethylene adipate (PEA), polybutylene adipate (PBA), and polyhexamethylene adipate (PHMA). Examples of the polycaprolactone polyol include poly-ε-caprolactone (PCL). Examples of the polycarbonate polyol include polyhexamethylene carbonate. The high molecular weight polyol may be used solely, or two or more of them may be used in combination.

The polyol component constituting the urethane (meth)acrylate oligomer preferably includes at least one member selected from the group consisting of the polyether diol, the polyester diol, the polycaprolactone diol and the polycarbonate diol.

The number average molecular weight of the polyol component constituting the urethane (meth)acrylate oligomer is preferably 300 or more, more preferably 500 or more, and even more preferably 1000 or more, and is preferably 10000 or less, more preferably 8000 or less, and even more preferably 5000 or less. If the number average molecular weight of the polyol component is 300 or more, softness can be imparted to the shaped product obtained by curing the photocurable composition. If the number average molecular weight of the polyol component is 10000 or less, hardness can be imparted to the shaped product obtained by curing the photocurable composition.

The number average molecular weight of the polyol component can be measured, for example, by gel permeation chromatography (GPC), using polystyrene as a standard material, tetrahydrofuran as an eluate, and an organic solvent system GPC column (e.g. "Shodex (registered trademark) KF series" available from Showa Denko K.K.) as a column.

The polyol component may include the low molecular weight polyol having the molecular weight of less than 500. Examples of the low molecular weight polyol include a diol such as ethylene glycol, diethylene glycol, triethylene glycol, 1,3-butanediol, 1,4-butanediol, neopentyl glycol and 1,6-hexanediol; and a triol such as glycerin, trimethylolpropane, and hexanetriol. The low molecular weight polyol may be used solely, or two or more of them may be used in combination.

The polyamine constituting the urethane (meth)acrylate oligomer is not particularly limited, as long as the polyamine has two or more amino groups. Examples of the polyamine include an aliphatic polyamine such as ethylene diamine, propylene diamine, butylene diamine and hexamethylene diamine; an alicyclic polyamine such as isophorone diamine and piperazine; and an aromatic polyamine.

The aromatic polyamine is not particularly limited, as long as the aromatic polyamine has two or more amino groups directly or indirectly bonding to an aromatic ring. Herein, "indirectly bonding" means the amino group is bonding to the aromatic ring, for example, via a lower alkylene group. The aromatic polyamine may be, for example, a monocyclic aromatic polyamine having one aromatic ring having two or more amino groups bonding thereto, or a polycyclic aromatic polyamine including two or more aminophenyl groups that have at least one amino group bonding to one aromatic ring.

Examples of the monocyclic aromatic polyamine include a type having amino groups directly bonding to an aromatic ring, such as phenylene diamine, toluene diamine, diethyltoluene diamine and dimethylthiotoluene diamine; and a type having amino groups bonding to an aromatic ring via a lower alkylene group, such as xylylene diamine. In addition, the polycyclic aromatic polyamine may be a poly(aminobenzene) having at least two aminophenyl groups directly bonding to each other, or at least two aminophenyl groups may bond to each other via a lower alkylene group or an alkylene oxide group. Among them, a diaminodiphenyl alkane having two aminophenyl groups bonding to each other via a lower alkylene group is preferable, and 4,4'-diaminodiphenyl methane and its derivative are particularly preferable.

Examples of the polyisocyanate component constituting the urethane (meth)acrylate oligomer include a compound having at least two isocyanate groups. Examples of the polyisocyanate include an aromatic polyisocyanate such as 2,4-tolylene diisocyanate, 2,6-tolylene diisocyanate, a mixture of 2,4-tolylene diisocyanate and 2,6-tolylene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), and para-phenylene diisocyanate (PPDI); an alicyclic polyisocyanate or aliphatic polyisocyanate such as 4,4'-dicyclohexylmethane diisocyanate (H₁₂MDI), hydrogenated xylylene diisocyanate (H₆XDI), hexamethylene diisocyanate (HDI), isophorone diisocyanate (IPDI), and norbornene diisocyanate (NBDI); and derivatives of these polyisocyanates. In the present invention, two or more of the polyisocyanates may be used in combination.

Examples of the derivative of the polyisocyanate include an adduct-modified product obtained by a reaction between a diisocyanate and a polyhydric alcohol; an isocyanurate-modified product of a diisocyanate; a biuret-modified product; and an allophanate modified product, and the polyisocyanate derivative from which free diisocyanate has been removed is more preferable.

The adduct-modified product is a polyisocyanate obtained by a reaction between a diisocyanate and a polyhydric alcohol. The polyhydric alcohol is preferably a low molecular weight triol such as trimethylolpropane and glycerin. The adduct-modified product is preferably, for example, a triisocyanate obtained by a reaction between a diisocyanate and trimethylolpropane; or a triisocyanate obtained by a reaction between a diisocyanate and glycerin.

The allophanate product is, for example, a triisocyanate obtained by further reacting a diisocyanate with a urethane bond formed by a reaction between a diisocyanate and a low molecular weight diol.

A urethane (meth)acrylic oligomer having a (meth)acryloyl group is obtained by a reaction between the urethane prepolymer having the isocyanate group at the terminal of the molecular chain and the (meth)acrylate having the hydroxy group. Examples of the (meth)acrylate having the hydroxy group include hydroxyalkyl (meth)acrylate such as 2-hydroxyethyl (meth)acrylate, 3-hydroxypropyl (meth)acrylate, 2-hydroxypropyl (meth)acrylate, and 4-hydroxybutyl (meth)acrylate.

A urethane (meth)acrylic oligomer having a (meth)acryloyl group is obtained by a reaction between the urethane prepolymer having the hydroxy group or amino group at the terminal of the molecular chain and a (meth)acrylate having an isocyanate group. Examples of the (meth)acrylate having the isocyanate group include 2-methacryloyloxyethyl isocyanate (trade name "Karenz MOI" available from Resonac Holdings Corporation), 2-acryloyloxyethyl isocyanate (trade name "Karenz AOI" available from Resonac Holdings Corporation), and methacryloyloxyethyl isocyanate ethyl ether (trade name "Karenz MOIEG" available from Resonac Holdings Corporation).

Examples of the urethane (meth)acrylate oligomer include an aliphatic urethane (meth)acrylate oligomer and an aromatic urethane (meth)acrylate oligomer. The aliphatic urethane (meth)acrylate oligomer includes an aliphatic compound as the component constituting the urethane (meth)acrylate oligomer, for example, an aliphatic polyisocyanate is used as the constituent component. The aromatic urethane (meth)acrylate oligomer includes an aromatic compound as the component constituting the urethane (meth)acrylate oligomer, for example, an aromatic polyisocyanate is used as the constituent component.

The glass transition temperature (Tg) of the urethane (meth)acrylate oligomer is not particularly limited, and it is preferably -100 °C or more, more preferably -90 °C or more, and even more preferably -80 °C or more, and is preferably 50 °C or less, more preferably 10 °C or less, even more preferably -20 °C or less, and particularly preferably -50 °C or less. If the glass transition temperature of the urethane (meth)acrylate oligomer falls within the above range, a mechanical strength can be imparted to the shaped product obtained by curing the photocurable composition while suppressing increase in a glass transition temperature (Tg) of the shaped product.

The urethane (meth)acrylate oligomer preferably has two or more (meth)acryloyl groups in the molecule. The number of the (meth)acryloyl groups in one molecule is not particularly limited, and is preferably 2 or more, and is preferably 10 or less, more preferably 4 or less.

The number average molecular weight of the urethane (meth)acrylate oligomer is preferably 300 or more, more preferably 1000 or more, and even more preferably 3000 or more, and is preferably 30000 or less, more preferably 20000 or less, and even more preferably 15000 or less. If the number average molecular weight of the urethane (meth)acrylate oligomer falls within the above range, the processability in the stereolithography is better, and the shaped product obtained by curing the photocurable composition is excellent in curing shrinkage ratio or mechanical strength.

When the total amount of the urethane (meth)acrylate oligomer and the vinyl monomer is 100 mass %, the amount of the urethane (meth)acrylate oligomer is preferably 20 mass % or more, more preferably 30 mass % or more, and even more preferably 35 mass % or more, and is preferably 80 mass % or less, more preferably 60 mass % or less, and even more preferably 50 mass % or less.

If the amount of the urethane (meth)acrylate oligomer is 80 mass % or less, the viscosity of the photocurable composition is not excessively high, and thus the shaping by stereolithography is easier. In addition, if the amount of the urethane (meth)acrylate oligomer is 20 mass % or more, the shaped product obtained by curing the photocurable composition has a non-lowered mechanical strength.

The amount of the urethane (meth)acrylate oligomer is preferably appropriately selected from the above range such that the total amount of the urethane (meth)acrylate oligomer and the vinyl monomer is 100 mass %.

### 2. Vinyl monomer

In the present invention, the "vinyl monomer" means a monomer having a radical-polymerizable carbon-carbon double bond in the molecule. The vinyl monomer preferably includes a first monomer whose homopolymer has a glass transition temperature (Tg1) of -100 °C or more and 10 °C or less, and a second monomer whose homopolymer has a glass transition temperature (Tg2) of 70 °C or more and 150 °C or less. If the vinyl monomer includes the first monomer with the low glass transition temperature and the second monomer with the high glass transition temperature, the shaped product obtained by curing the photocurable composition has excellent mechanical properties.

The glass transition temperature of the homopolymer of a polymerizable monomer can be measured by differential scanning calorimetry (DSC) in accordance with JIS K7121. More specifically, a sample prepared by polymerizing a polymerizable monomer to the extent that its homopolymer exhibits a constant glass transition temperature is measured with a measurement apparatus, for example, Model DSC6220 manufactured by Seiko Instruments Inc.

The glass transition temperature (Tg1) of the first monomer is preferably - 100 °C or more, more preferably -70 °C or more, and even more preferably -50 °C or more, and is preferably 10 °C or less, more preferably 5 °C or less, even more preferably 0 °C or less, and particularly preferably -5 °C or less.

The glass transition temperature (Tg2) of the second monomer is preferably 70 °C or more, more preferably 75 °C or more, even more preferably 80 °C or more, and particularly preferably 90 °C or more, and is preferably 150 °C or less, more preferably 130 °C or less, and even more preferably 110 °C or less.

The (Tg2-Tg1) between the glass transition temperature (Tg2) of the second monomer and the glass transition temperature (Tg1) of the first monomer is preferably 60 °C or more, more preferably 80 °C or more, even more preferably 90 °C or more, and particularly preferably 100 °C or more, and is preferably 250 °C or less, more preferably 200 °C or less, even more preferably 150 °C or less, and particularly preferably 120 °C or less.

When the total amount of the urethane (meth)acrylate oligomer and the vinyl monomer is 100 mass %, the amount of the first monomer is preferably 15 mass % or more, more preferably 30 mass % or more, and even more preferably 40 mass % or more, and is preferably 75 mass % or less, more preferably 60 mass % or less, and even more preferably 50 mass % or less. If the amount of the first monomer falls within the above range, a mechanical strength is imparted to the shaped product obtained by curing the photocurable composition while decreasing the glass transition temperature (Tg) of the shaped product.

When the total amount of the urethane (meth)acrylate oligomer and the vinyl monomer is 100 mass %, the amount of the second monomer is preferably 5 mass % or more, more preferably 8 mass % or more, and even more preferably 10 mass % or more, and is preferably 65 mass % or less, more preferably 50 mass % or less, and even more preferably 30 mass % or less. If the amount of the second monomer falls within the above range, increase in the glass transition temperature (Tg) of the shaped product obtained by curing the photocurable composition is suppressed while imparting a mechanical strength to the shaped product.

It is preferable that each of the amount of the first monomer and the amount of the second monomer is appropriately selected within the above-described range such that the total amount of the urethane (meth)acrylate oligomer and the vinyl monomer becomes 100 mass %.

The mass ratio (first monomer/second monomer) of the first monomer to the second monomer is preferably 0.5 or more, more preferably 1.0 or more, and even more preferably 2.0 or more, and is preferably 15 or less, more preferably 10 or less, and even more preferably 5 or less. If the mass ratio (first monomer/second monomer) falls within the above range, the inventive effect is better.

Specific examples of the vinyl monomer include an aromatic vinyl monomer, a vinyl monomer having a hydroxy group, a vinyl monomer having a carboxyl group, a vinyl monomer having a sulfonic acid group, a vinyl monomer having a phosphoric acid group, a vinyl monomer having a tertiary amine, a vinyl monomer having a quaternary ammonium salt group, a vinyl monomer having a heterocycle, a vinyl amide, a vinyl monomer having an epoxy group, a carboxylic acid vinyl, an α-olefin, a diene, and a (meth)acrylic monomer.

Examples of the vinyl monomer include a monofunctional monomer, and a polyfunctional monomer (such as a difunctional monomer, a trifunctional monomer, a tetrafunctional monomer, etc.). From the viewpoint of allowing the cured elastic shaped product to exhibit more excellent properties while providing a viscosity suitable for stereolithography, the vinyl monomer preferably includes the monofunctional monomer, the difunctional monomer, the trifunctional monomer, or the tetrafunctional monomer. The monofunctional monomer is preferably used from the viewpoint of lowering the viscosity of the photocurable composition at room temperature. In addition, the polyfunctional monomer is preferably used from the viewpoint of allowing the shaped product to exhibit more excellent properties.

The vinyl monomer preferably includes a (meth)acrylate in view of its excellent photocuring reactivity while providing a viscosity suitable for stereolithography.

Preferable examples of the monofunctional monomer include a monofunctional (meth)acrylate. Specific examples of the monofunctional (meth)acrylate include ethoxylated nonylphenol acrylate, methyl-2-allyloxymethyl acrylate, m-phenoxybenzyl acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, (meth)acrylate of a product obtained by a reaction between ethylene oxide and p-cumylphenol, 2-bromophenoxyethyl (meth)acrylate, 2,4-dibromophenoxyethyl (meth)acrylate, 2,4,6-tribromophenoxyethyl (meth)acrylate, phenoxy (meth)acrylate modified with multiple moles of ethylene oxide or propylene oxide, isobornyl (meth)acrylate, bornyl (meth)acrylate, (2-methyl-2-ethyl-1,3-dioxolane-4-yl)methyl (meth)acrylate, tricyclodecanyl (meth)acrylate, dicyclopentanyl (meth)acrylate, dicyclopentenyl (meth)acrylate, cyclohexyl (meth)acrylate, 4-butylcyclohexyl (meth)acrylate, acryloyl morpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxy diethylene glycol (meth)acrylate, polyethylene glycol mono(meth)acrylate, polypropylene glycol mono(meth)acrylate, methoxy ethylene glycol (meth)acrylate, ethoxyethyl (meth)acrylate, methoxy polyethylene glycol (meth)acrylate, methoxy polypropylene glycol (meth)acrylate, diacetone(meth)acryl amide, isobutoxymethyl(meth)acryl amide, N,N-dimethyl(meth)acryl amide, t-octyl(meth)acryl amide, dimethylaminoethyl (meth)acrylate, diethylaminoethyl (meth)acrylate, 7-amino-3,7-dimethyloctyl (meth)acrylate, N,N-diethyl(meth)acryl amide, N,N-dimethylaminopropyl(meth)acryl amide, hydroxybutylvinyl ether, laurylvinyl ether, cetylvinyl ether, 2-ethylhexylvinyl ether, polyoxyethylene nonylphenyl ether (meth)acrylate, and vinyl monomer (e.g. N-vinylpyrrolidone, N-vinyl caprolactam, vinyl imidazole, and vinyl pyridine).

In addition, specific examples of the polyfunctional (meth)acrylate include polyethylene glycol di(meth)acrylate, dipropylene glycol diacrylate, propoxylated pentyl glycol diacrylate, propoxylated glyceryl triacrylate, trimethylolpropane tri(meth)acrylate, pentaerythritol tri(meth)acrylate, pentaerythritol tetra(meth)acrylate, ethylene glycol di(meth)acrylate, tetraethylene glycol di(meth)acrylate, polypropylene glycol di(meth)acrylate, 1,4-butanediol di(meth)acrylate, 1,6-hexanediol di(meth)acrylate, neopentyl glycol di(meth)acrylate, trimethylolpropane trioxyethyl (meth)acrylate, tris(2-hydroxyethyl)isocyanurate tri(meth)acrylate, tris(acryloyloxy) isocyanurate, bis(hydroxymethyl)tricyclodecane di(meth)acrylate, dipentaerythritol hexa(meth)acrylate, di(meth)acrylate of diol that is an adduct of bisphenol A and polyethylene oxide or propylene oxide, di(meth)acrylate of diol that is an adduct obtained by a reaction between hydrogenated bisphenol A and ethylene oxide or propylene oxide, epoxy (meth)acrylate obtained by an addition reaction between diglycidyl ether of bisphenol A and (meth)acrylate, and triethylene glycol divinyl ether.

For the glass transition temperature (Tg) of the vinyl monomer, for example, glass transition temperatures disclosed in the following websites can be referenced.
https://www.saiden-chem.co.jp/t_sekkei_ema.html
https://www.kyoeisha.co.jp/product/kinou/lightester.php
https://www.kyoeisha.co.jp/product/kinou/lightacrylate.php
https://www.nitto.com/jp/ja/rd/base/adhesive/specificat/

Examples of the first monomer having the glass transition temperature (Tg1) of -100 °C or more and 10 °C or less include methyl acrylate (8 °C), ethyl acrylate (-24 °C), 2-ethylhexyl acrylate (-70 °C), 2-ethylhexyl methacrylate (-10 °C), isodecyl methacrylate (-41 °C), n-lauryl methacrylate (-65 °C), 2-hydroxyethyl acrylate (-15 °C), 2-hydroxypropyl acrylate (-7 °C), phenoxyethyl acrylate (-22 °C), lauryl acrylate (-3 °C), isoamyl acrylate (-45 °C), butyl acrylate (-55 °C), ethyl acrylate (-24 °C), ethoxy-diethylene glycol acrylate (-70 °C), methoxy-triethylene glycol acrylate (-50 °C), and (2-methyl-2-ethyl-1 ,3-dioxolane-4-yl) methylacrylate (-7 °C).

Examples of the second monomer having the glass transition temperature (Tg2) of 70 °C or more and 150 °C or less include isobornyl acrylate (97 °C), t-butyl methacrylate (107 °C), methyl methacrylate (105 °C), styrene (100 °C), acrylic acid (106 °C), and acrylonitrile (97 °C).

### 3. Carbon nanotube

The carbon nanotube (CNT) is, for example, a carbon material where a graphene sheet is rolled up to form a hollow tube. Examples of the carbon nanotube include a single-walled carbon nanotube (SWCNT) composed of a single graphene sheet, and a multi-walled carbon nanotube (MWCNT) composed of two or at least three graphene sheets. These carbon nanotubes may be used solely, or two or more of them may be used in combination. The carbon nanotube used for the present invention preferably includes the single-walled carbon nanotube.

The amount of the carbon nanotube is preferably 0.01 part by mass or more, more preferably 0.05 part by mass or more, and even more preferably 0.10 part by mass or more, and is preferably 0.35 part by mass or less, more preferably 0.30 part by mass or less, and even more preferably 0.25 part by mass or less, with respect to 100 parts by mass of the total amount of the urethane (meth)acrylate oligomer and the vinyl monomer. If the amount of the carbon nanotube is 0.01 part by mass or more, the shaped product obtained by curing the photocurable composition has improved mechanical properties, and if the amount of the carbon nanotube is 0.35 part by mass or less, increase in the viscosity of the photocurable composition is suppressed, and the stereolithography of the shaped product is easier.

### 4. Other component

The photocurable composition according to the present invention preferably comprises a photopolymerization initiator. If the photopolymerization initiator is comprised, curing of the above-described photocurable composition can be accelerated. The photopolymerization initiator is not particularly limited, and a conventional photopolymerization initiator that generates a radical by light irradiation can be used.

Examples of the photopolymerization initiator include an alkylphenone-based photopolymerization initiator such as 2-hydroxy-2-methylpropiophenone, 2,2-dimethoxy-2-phenylacetophenone, 1-hydroxycyclohexyl phenylketone, 2-hydroxy-4'-(2-hydroxyethoxy)-2-methylpropiophenone, 2-(4-(methylthio)benzoyl)-2-(4-morpholinyl)propane, 2-(dimethylamino)-1-(4-morpholinophenyl)-2-benzyl-1-butanone, and 2-(dimethylamino)-2-(4-methylbenzyl)-1-(4-morpholinophenyl)butane-1-one; an acylphosphine oxide-based photopolymerization initiator such as phenylbis(2,4,6-trimethylbenzoyl)phosphine oxide, and 2,4,6-trimethylbenzoyldiphenylphosphine oxide; and an oxime ester-based photopolymerization initiator such as 1,2-octanedione,1-(4-(phenylthio)-,2-(O-benzoyloxime)), and ethanone,1-(9-ethyl-6-(2-methylbenzoyl)-9H-carbazole-3-yl)-,1-(O-acetyloxime).

In the stereolithography, a light source having a peak of light intensity in a wavelength range from 390 nm to 410 nm, particularly a light source having a peak of light intensity at a wavelength of 405 nm is primarily used. It is preferable to initiate the radical polymerization of the photocurable composition by irradiating light of such light source. The photopolymerization initiator may be used solely, or two or more of them may be used in combination.

In the stereolithography using such light source, from the viewpoint of suitably curing the photocurable composition, the photocurable composition according to the present invention preferably comprises two or more photopolymerization initiators having different absorption bands. For example, a photopolymerization initiator having an absorption band at a wavelength region of 405 nm and a photopolymerization initiator having an absorption band in a wavelength region of 300 nm to 380 nm are preferably used in combination. In the present invention, as the photopolymerization initiator, the alkylphenone-based photopolymerization initiator and the acylphosphine oxide-based photopolymerization initiator are preferably used in combination.

The amount of the photopolymerization initiator is preferably 1 part by mass or more, more preferably 1.5 parts by mass or more, and even more preferably 2 parts by mass or more, and is preferably 30 parts by mass or less, more preferably 20 parts by mass or less, even more preferably 10 parts by mass or less, and particularly preferably 5 parts by mass or less, with respect to 100 parts by mass of the total amount of the urethane (meth)acrylate oligomer and the vinyl monomer.

In the case that the alkylphenone-based photopolymerization initiator and the acylphosphine oxide-based photopolymerization initiator are used in combination, the mass ratio (alkylphenone-based photopolymerization initiator/acylphosphine oxide-based photopolymerization initiator) is preferably 0.2 or more, more preferably 0.5 or more, and even more preferably 0.8 or more, and is preferably 5 or less, more preferably 3 or less, and even more preferably 2 or less.

The photocurable composition according to the present invention may further comprise various additives as long as the additives do not impair the inventive effect. Examples of the additive include a silane coupling agent, a dilution polymer, a photosensitizer, a filler (excluding the carbon nanotube), a UV screening agent, a dye, a pigment, a leveling agent, a fluidity modifier, a deforming agent, a plasticizer, a polymerization inhibitor, a flame retardant, a dispersion stabilizer, a storage stabilizer, an antioxidant, a metal, a metal oxide, a metal salt, and a ceramic. The additive comprised in the photocurable composition may be one, or at least two.

As the filler, silica is preferable. The amount of the filler is preferably 1 part by mass or more, more preferably 5 parts by mass or more, and is preferably 50 parts by mass or less, more preferably 30 parts by mass or less, with respect to 100 parts by mass of the total amount of the urethane (meth)acrylate oligomer and the vinyl monomer. If the amount of the filler falls within the above range, a mechanical strength can be imparted to the shaped product obtained by curing the photocurable composition, while suppressing increase in the viscosity of the photocurable composition.

The silane coupling agent is not particularly limited, and example thereof include an alkylalkoxy silane such as methyltrimethoxy silane, dimethyldimethoxy silane, dimethyldiethoxy silane, and triethoxy-n-octyl silane; a vinyl silane such as vinyltrimethoxy silane, and vinyltriethoxy silane; an amino silane such as γ-aminopropyltriethoxy silane, N-(β-aminoethyl)-γ-aminopropyltrimethoxy silane, and N-(β-aminoethyl)-γ-aminopropylmethyldimethoxy silane; an epoxy silane such as γ-glycidoxypropyltrimethoxy silane, and β-glycidoxypropylmethyldimethoxy silane; a methacryloxy silane such as γ-methacryloxypropyltrimethoxy silane, and γ-methacryloxypropylmethyldimethoxy silane; and a mercapto silane such as γ-mercaptopropyltrimethoxy silane (3-mercaptopropyltrimethoxy silane).

The photocurable composition according to the present invention is easily produced by mixing the urethane (meth)acrylate oligomer, the vinyl monomer, the carbon nanotube, and the photopolymerization initiator or various additives to be contained where necessary.

The viscosity of the photocurable composition according to the present invention as measured with an E-type viscometer under conditions of a cone plate diameter of ϕ 25 mm and a shear rate of 100 second⁻¹ in an environment of a temperature of 25 °C and a relative humidity of 50 % is preferably 1,000 mPa·s or more, more preferably 1,500 mPa·s or more, and even more preferably 2,000 mPa·s or more, and is preferably 6,000 mPa·s or less, more preferably 5,500 mPa·s or less, and even more preferably 5,000 mPa·s or less. If the viscosity of the photocurable composition falls within the above range, an elasticity can be imparted to the shaped product obtained by curing the photocurable composition while having an appropriate viscosity for the stereolithography in an environment of room temperature.
In addition, if the viscosity of the photocurable composition falls within the above range, the processability is better.

The photocurable composition according to the present invention can be suitably used for stereolithography.

### <Method producing object having three-dimensional shape by stereolithography>

The present invention includes a method producing an object having a three-dimensional shape from the photocurable composition according to the present invention by stereolithography. The method according to the present invention for producing the object having the three-dimensional shape by stereolithography preferably has a step of irradiating light to the photocurable composition to cure the photocurable composition according to the present invention; and a step of forming the cured photocurable composition into a three-dimensional shape. It is noted that in the present invention, the object having the three-dimensional shape produced by the stereolithography is sometimes simply referred to as "shaped product".

As the method producing the shaped product according to the present invention, for example, various types of stereolithography such as a SLA type (stereolithography laser type: Stereolithography Apparatus), a DLP type (stereolithography projector (surface exposure) type: Digital Light Processing), and a LCD type (stereolithography liquid display type: Liquid Crystal Display) can be adopted.

The method according to the present invention for producing the object having the three-dimensional shape by stereolithography preferably has, for example, the following first step to the Nth step.

In the first step, the photocurable composition according to the present invention is supplied on a lithography table, and light is irradiated to the photocurable composition to cure the photocurable composition, and a first layer is formed from the cured product. It is noted that the photocurable composition is preferably supplied on the lithography table in a shape of a layer. The photocurable composition is applied to the locations corresponding to the final three-dimensional shape of the lithography table, and is not necessarily applied to the whole surface of the lithography table.

In the second step, the photocurable composition is supplied on the cured product of the first layer, and light is irradiated on the photocurable composition to cure the photocurable composition, and a second layer is formed from the cured product. It is noted that the photocurable composition is preferably supplied on the first layer in a shape of a layer. The photocurable composition is applied to the locations corresponding to the final three-dimensional shape of the first layer, and is not necessarily applied to the whole surface of the first layer.

The second step is preferably repeated until a Nth step (N is a natural number of 3 or more). In the Nth step, the photocurable composition is supplied on the cured product of the (N-1)th layer, and light is irradiated to the photocurable composition to cure the photocurable composition, and a Nth layer is formed from the cured product. It is noted that the photocurable composition is preferably supplied on the (N-1)th layer in a shape of a layer. The photocurable composition is applied to the locations corresponding to the final three-dimensional shape of the (N-1)th layer, and is not necessarily applied to the whole surface of the (N-1)th layer.

By conducting the first step to the Nth step, the photocurable composition is shaped into an object having a three-dimensional shape where the cured products of the photocurable composition are laminated.

In the method according to the present invention for producing the object having the three-dimensional shape by stereolithography, a common 3D printer is preferably used. As the 3D printer, a commercial product can be used.

In the stereolithography, the thickness of a single layer when curing the photocurable composition is preferably, for example, from about 0.01 mm to about 0.5 mm. In addition, the irradiated light is generally ultraviolet light, and preferably includes a light having a wavelength of 405 nm. In addition, the illuminance intensity of the irradiated light is preferably from about 0.1 mW/cm² to about 100 mW/cm² at the measuring wavelength of 405 nm. The light irradiation time per layer for curing a single layer of the photocurable composition varies depending on the type of the stereolithography, and is suitably adjusted. For example, the light irradiation time is about 1 second to about 60 seconds for the DLP type. The shaped product according to the present invention is preferably produced in an environment of about a room temperature (e.g. 20 °C to 30 °C).

In addition, after the above described stereolithography, conventional secondary treatments such as high-pressure mercury lamp irradiation, metal halide lamp irradiation, UV-LED irradiation, and heating may be further conducted where necessary. These secondary treatments modify the surface, improve the strength, or accelerate the curing after shaping. The secondary treatment may be conducted in combination with the stereolithography, although the secondary treatment is not always necessary depending on the stereolithography conditions.

### <Shaped product and cured product>

The present invention further includes a cured product and a shaped product obtained by curing the photocurable composition according to the present invention.

The cured product and shaped product according to the present invention preferably have rubber elasticity as a mechanical property. The cured product or shaped product according to the present invention preferably has, for example, the following mechanical properties.

The hardness of the cured product and shaped product according to the present invention is preferably 20 or more, more preferably 25 or more, and even more preferably 30 or more, and is preferably 100 or less, more preferably 80 or less, and even more preferably 70 or less in Shore A hardness. If the hardness of the cured product and shaped product according to the present invention falls within the above range, the cured product and shaped product according to the present invention become a substitution for a product required to have rubber elasticity.

The tensile strength at break of the cured product and shaped product according to the present invention is preferably 2.0 MPa or more, more preferably 3.0 MPa or more, and even more preferably 4.0 MPa or more. If the tensile strength at break of the cured product and shaped product according to the present invention falls within the above range, the cured product and shaped product according to the present invention become a substitution for a product required to have rubber elasticity. The upper limit of the tensile strength at break is not particularly limited, but it is generally 50.0 MPa.

The tensile elongation at break of the cured product and shaped product according to the present invention is preferably 280% or more, more preferably 290% or more, and even more preferably 300% or more. If the tensile elongation at break of the cured product and shaped product according to the present invention falls within the above range, the cured product and shaped product according to the present invention become a substitution for a product required to have rubber elasticity. The upper limit of the tensile elongation at break is not particularly limited, but it is generally 500%.

It is noted that the above properties are values measured by the methods described later.

### EXAMPLES

Next, the present invention will be described in detail by way of examples. However, the present invention is not limited to the examples described below. Various changes and modifications without departing from the spirit of the present invention are included in the scope of the present invention.

### 1. Evaluation method

### (Viscosity of photocurable composition)

The viscosity of the photocurable composition was measured with an E-type viscometer (MCR301 available from Anton-Paar Group) under conditions of a cone plate diameter of ϕ 25 mm and a shear rate of 100 second⁻¹ in an environment of a temperature of 25 °C (accuracy: ± 2 °C) and a relative humidity of 50 %.

### (Hardness of cured product (shaped product))

The Shore A hardness of the obtained cured product (shaped product) (having a shape of the compression piece with ϕ 29×12.5 mm prescribed in JIS K6262: 2013) obtained by curing the photocurable composition was measured according to the method prescribed in JIS K6253-3: 2012.

### (Tensile test of cured product (shaped product))

The tensile strength at break and the tensile elongation at break of the obtained cured product (shaped product) (dumbbell-shaped test piece No. 3 prescribed in JIS K6251 : 2017) obtained by curing the photocurable composition were measured according to JIS K6251: 2017. A greater value of the tensile strength at break means the cured product (shaped product) has higher strength, and a greater value of the tensile elongation at break means the cured product (shaped product) elongates more easily and has better mechanical properties.

### 2. Production of photocurable composition

According to the formulations (parts by mass) shown in Table 1, the following materials were mixed and defoamed with a planetary centrifugal mixer(revolution and rotation type), to prepare photocurable compositions. The viscosity of the prepared photocurable compositions was measured and the results are shown in Table 1. All the components were mixed uniformly. In Table 1, "-" means that this component is not contained.

As the materials in Table 1, the following materials were used.
·Urethane (meth)acrylate oligomer: CN8899 NS (aliphatic urethane acrylate oligomer, viscosity at 60 °C: 25000 mPa·s to 35000 mPa·s, glass transition temperature: -80 °C) available from Arkema Corporation
·First vinyl monomer: MEDOL-10 (2-methyl-2-ethyl-1,3-dioxolane-4-yl)methyl acrylate, molecular weight: 200.2, viscosity at 25 °C: 5.1 mPa·s, glass transition temperature: -7 °C) available from Osaka Organic Chemical Industry Ltd.
·Second vinyl monomer: IBXA (isobornyl acrylate, molecular weight: 208.3, viscosity at 25 °C: 7.7 mPa·s, glass transition temperature: 97 °C) available from Osaka Organic Chemical Industry Ltd.
·Carbon nanotube 1: TUBALL (single-walled carbon nanotube, average outer diameter: 1.6 ± 0.4 nm, length: at least 5 µm, surface area: at least 300 m²/g, G/D ratio: at least 90) available from OCSiAl Corporation
·Carbon nanotube 2: (multi-walled carbon nanotube, diameter: 20 nm to 30 nm, CAS Registry Number: 308068-56-6) available from FUJIFILM Wako Chemical Corporation
·Photopolymerization initiator 1: Omnirad 819 (acylphosphine oxide-based photopolymerization initiator, phenyl bis(2,4,6-trimethylbenzoyl)phosphine oxide, molecular weight: 418.5) available from IGM Resins B.V.
·Photopolymerization initiator 2: Omnirad 1173 (alkylphenone-based photopolymerization initiator, 2-hydroxy-2-methylpropiophenone, molecular weight: 164.2, viscosity at 25 °C: 25 mPa·s) available from IGM Resins B.V.

**Table 1**

| Photocurable composition No. | | 1 | 2 | 3 | 4 | 5 | 6 | 7 | 8 | 9 | 10 | 11 |
|---|---|---|---|---|---|---|---|---|---|---|---|---|
| Urethane (meth)acrylate oligomer | | 40 | 40 | 40 | 40 | 40 | 40 | 40 | 40 | 40 | 40 | 40 |
| First vinyl monomer (Tg: -7 °C) | | 45 | 45 | 45 | 45 | 45 | 45 | 45 | 45 | 45 | 45 | 45 |
| Second vinyl monomer (Tg: 97 °C) | | 15 | 15 | 15 | 15 | 15 | 15 | 15 | 15 | 15 | 15 | 15 |
| Carbon nanotube 1 (single-walled) | | - | 0.001 | 0.01 | 0.03 | 0.05 | 0.10 | 0.15 | 0.20 | 0.35 | - | 0.40 |
| Carbon nanotube 2 (multi-walled) | | - | - | - | - | - | - | - | - | - | 0.10 | - |
| Photopolymerization initiator 1 (acylphosphine oxide-based) | | 1.1 | 1.1 | 1.1 | 1.1 | 1.1 | 1.1 | 1.5 | 1.5 | 1.5 | 1.5 | 1.1 |
| Photopolymerization initiator 2 (alkylphenone-based) | | 1.5 | 1.5 | 1.5 | 1.5 | 1.5 | 1.5 | 1.5 | 1.5 | 1.5 | 1.5 | 1.5 |
| Viscosity of photocurable composition (mPa·s) | | 1,900 | 1,900 | 2,000 | 2,100 | 2,400 | 2,900 | 3,400 | 4,000 | 5,500 | 2,100 | 6,600 |
| Properties of cured product | Hardness (Shore A) | 34 | 31 | 33 | 40 | 44 | 47 | 57 | 65 | 96 | 36 | Unable to be fabricated |
| | Tensile strength at break (MPa) | 1.6 | 1.7 | 2.1 | 3.2 | 4.0 | 4.6 | 6.5 | 8.1 | 12.7 | 1.9 | |
| | Tensile elongation at break (%) | 227 | 272 | 294 | 301 | 312 | 304 | 344 | 329 | 335 | 336 | |

Formulation: parts by mass

### 3. Production of shaped product (object having three-dimensional shape)

The shaped product was shaped from the photocurable composition by stereolithography in a DLP mode. Specifically, the shaped product was shaped using a 3D printer provided with a light source (UV-LED) having a peak wavelength of 405 nm, under conditions of a temperature of 23 °C, a lamination pitch of 0.05 mm, an irradiation time per layer of 20 seconds and illuminance intensity at a wavelength of 405 nm of 5.0 mW/cm². The shaped products were prepared in two shapes. One shape is the shape of the test piece with ϕ 29×12.5 mm prescribed in JIS K6262: 2013 used for the above-described hardness measurement, and the other shape is the shape of the dumbbell-shaped test piece No. 3 prescribed in JIS K6251: 2017 used for the above-described tensile test.

The measurement results of the hardness, tensile strength at break and tensile elongation at break of the obtained molded products are shown in Table 1.

As apparent from the results shown in Table 1, the photocurable composition according to the present invention comprising: a urethane (meth)acrylate oligomer, a vinyl monomer including a first monomer having a glass transition temperature (Tg1) of -100 °C or more and 10 °C or less and a second monomer having a glass transition temperature (Tg2) of 70 °C or more and 150 °C or less, and a carbon nanotube, wherein the photocurable composition comprises the carbon nanotube in an amount ranging from 0.01 part by mass to 0.35 part by mass with respect to 100 parts by mass of a total amount of the urethane (meth)acrylate oligomer and the vinyl monomer provides a shaped product with excellent mechanical properties, and can be suitably used for stereolithography.

The photocurable composition according to the present invention is suitably used for stereolithography.

The preferable embodiment (1) according to the present invention is a photocurable composition comprising: a urethane (meth)acrylate oligomer, a vinyl monomer including a first monomer having a glass transition temperature (Tg1) of - 100 °C or more and 10 °C or less and a second monomer having a glass transition temperature (Tg2) of 70 °C or more and 150 °C or less, and a carbon nanotube, wherein the photocurable composition comprises the carbon nanotube in an amount ranging from 0.01 part by mass to 0.35 part by mass with respect to 100 parts by mass of a total amount of the urethane (meth)acrylate oligomer and the vinyl monomer.

The preferable embodiment (2) according to the present invention is the photocurable composition according to the embodiment (1), wherein an amount of the urethane (meth)acrylate oligomer ranges from 20 mass % to 80 mass %, an amount of the first monomer ranges from 15 mass % to 75 mass %, and an amount of the second monomer ranges from 5 mass % to 65 mass %, when a total amount of the urethane (meth)acrylate oligomer and the vinyl monomer is 100 mass %.

The preferable embodiment (3) according to the present invention is the photocurable composition according to the embodiment (1) or (2), wherein the urethane (meth)acrylate oligomer has a (meth)acryloyl group.

The preferable embodiment (4) according to the present invention is the photocurable composition according to any one of the embodiments (1) to (3), wherein the vinyl monomer includes at least one member selected from the group consisting of a monofunctional vinyl monomer, a difunctional vinyl monomer, a trifunctional vinyl monomer, and a tetrafunctional vinyl monomer.

The preferable embodiment (5) according to the present invention is the photocurable composition according to any one of the embodiments (1) to (4), wherein the vinyl monomer includes a (meth)acrylate.

The preferable embodiment (6) according to the present invention is the photocurable composition according to any one of the embodiments (1) to (5), wherein the first monomer includes (2-methyl-2-ethyl-1,3-dioxolane-4-yl) methacrylate.

The preferable embodiment (7) according to the present invention is the photocurable composition according to any one of the embodiments (1) to (6), wherein the second monomer includes isobornyl acrylate.

The preferable embodiment (8) according to the present invention is the photocurable composition according to any one of the embodiments (1) to (7), where the photocurable composition has a viscosity of 6,000 mPa·s or less as measured at a temperature of 25 °C and a shear rate of 100 second⁻¹.

The preferable embodiment (9) according to the present invention is the photocurable composition according to any one of the embodiments (1) to (8), wherein the photocurable composition is for stereolithography.

The preferable embodiment (10) according to the present invention is a cured product cured from the photocurable composition according to any one of the embodiments (1) to (9).

The preferable embodiment (11) according to the present invention is a shaped product shaped from the photocurable composition according to any one of the embodiments (1) to (9) by stereolithography.

The preferable embodiment (12) according to the present invention is a method for producing an object having a three-dimensional shape from the photocurable composition according to any one of the embodiments (1) to (9) by stereolithography.

## Claims

1. A photocurable composition comprising:
a urethane (meth)acrylate oligomer,
a vinyl monomer including a first monomer having a glass transition temperature (Tg1) of -100 °C or more and 10 °C or less and a second monomer having a glass transition temperature (Tg2) of 70 °C or more and 150 °C or less, and
a carbon nanotube,
wherein the photocurable composition comprises the carbon nanotube in an amount ranging from 0.01 part by mass to 0.35 part by mass with respect to 100 parts by mass of a total amount of the urethane (meth)acrylate oligomer and the vinyl monomer.

2. The photocurable composition according to claim 1, wherein an amount of the urethane (meth)acrylate oligomer ranges from 20 mass % to 80 mass %, an amount of the first monomer ranges from 15 mass % to 75 mass %, and an amount of the second monomer ranges from 5 mass % to 65 mass %, when a total amount of the urethane (meth)acrylate oligomer and the vinyl monomer is 100 mass %.

3. The photocurable composition according to claim 1, wherein the urethane (meth)acrylate oligomer has a (meth)acryloyl group.

4. The photocurable composition according to claim 1, wherein the vinyl monomer includes at least one member selected from the group consisting of a monofunctional vinyl monomer, a difunctional vinyl monomer, a trifunctional vinyl monomer, and a tetrafunctional vinyl monomer.

5. The photocurable composition according to claim 1, wherein the vinyl monomer includes a (meth)acrylate.

6. The photocurable composition according to claim 1, wherein the first monomer includes (2-methyl-2-ethyl-1,3-dioxolane-4-yl) methacrylate.

7. The photocurable composition according to claim 1, wherein the second monomer includes isobornyl acrylate.

8. The photocurable composition according to claim 1, wherein the photocurable composition has a viscosity of 6,000 mPa·s or less measured at a temperature of 25 °C and a shear rate of 100 second⁻¹.

9. The photocurable composition according to claim 1, wherein the photocurable composition is for stereolithography.

10. A cured product cured from the photocurable composition according to any one of claims 1 to 9.

11. A shaped product obtained from the photocurable composition according to any one of claims 1 to 9 by stereolithography.

12. A method producing an object having a three-dimensional shape by stereolithography, comprising
a step of irradiating light to a photocurable composition to cure the photocurable composition, and forming the cured photocurable composition into the object having a three-dimensional shape,
wherein the photocurable composition comprises:
a urethane (meth)acrylate oligomer,
a vinyl monomer including a first monomer having a glass transition temperature (Tg1) of -100 °C or more and 10 °C or less and a second monomer having a glass transition temperature (Tg2) of 70 °C or more and 150 °C or less, and
a carbon nanotube,
wherein the photocurable composition comprises the carbon nanotube in an amount ranging from 0.01 part by mass to 0.35 part by mass with respect to 100 parts by mass of a total amount of the urethane (meth)acrylate oligomer and the vinyl monomer.

13. The method according to claim 12, wherein an amount of the urethane (meth)acrylate oligomer ranges from 20 mass % to 80 mass %, an amount of the first monomer ranges from 15 mass % to 75 mass %, and an amount of the second monomer ranges from 5 mass % to 65 mass %, when a total amount of the urethane (meth)acrylate oligomer and the vinyl monomer is 100 mass %.

14. The method according to claim 12 or 13, wherein the first monomer includes (2-methyl-2-ethyl-1,3-dioxolane-4-yl) methacrylate, and the second monomer includes isobornyl acrylate.

15. The method according to any one of claims 12 to 14, wherein the photocurable composition has a viscosity of 6,000 mPa·s or less measured at a temperature of 25 °C and a shear rate of 100 second⁻¹.
